Europäisches Patentamt

European Patent Office

Office européen des brevets

(11) Veröffentlichungsnummer: **0 309 976 B1**

# EUROPÄISCHE PATENTSCHRIFT

(45) Veröffentlichungstag der Patentschrift: **02.12.92**

(21) Anmeldenummer: **88115853.9**

(22) Anmeldetag: **27.09.88**

Verbunden mit 88908859.7/0334932
(europäische
Anmeldenummer/Veröffentlichungsnummer)
durch Entscheidung vom 06.08.91.

(51) Int. Cl.⁵: **H04N 9/64**, H04N 11/08

(54) **Schaltungsanordnung zur Bearbeitung von Videokomponenten.**

(30) Priorität: **30.09.87 DE 3733004**

(43) Veröffentlichungstag der Anmeldung:
**05.04.89 Patentblatt 89/14**

(45) Bekanntmachung des Hinweises auf die
Patenterteilung:
**02.12.92 Patentblatt 92/49**

(84) Benannte Vertragsstaaten:
**AT BE CH DE ES FR GB GR IT LI LU NL SE**

(56) Entgegenhaltungen:
**GB-A- 2 140 242**

**PATENT ABSTRACTS OF JAPAN, Band 8, Nr.
198 (E-265)[1635], 11. September 1984;& JP-
A-59 85 196 (NIPPON VICTOR K.K.)
17-05-1984**

(73) Patentinhaber: **Deutsche Thomson-Brandt
GmbH
Hermann-Schwer-Strasse 3 Postfach 1307
W-7730 Villingen-Schwenningen(DE)**

(72) Erfinder: **Keesen, Heinz-Werner, Dr.-Ing.
Tiestestrasse 5
W-3000 Hannover 1(DE)**
Erfinder: **Perdrieau, Laurent
5, Rue Chateaubriand
F-67040 Illkirch(FR)**

**Beschreibung**

Die Erfindung betrifft eine Schaltungsanordnung zur Bearbeitung von Videokomponenten.

Aus "Funkschau" Band 25, Seite 53, 1985 ist eine digitale Bildwiedergabe bekannt, bei dem das FBAS Signal digital verarbeitet wird. Dazu wird das FBAS Signal in einem A/D-Wandler digital aufbereitet, in einem digitalen Farbdecoder wird das Signal aufgeteilt in die Komponenten des Y-Signals und die Komponenten U- und V-Signale. Zur Vermeidung eines übermäßigen Leitungsaufwandes werden die Signale mittels eines Multiplexers am Ausgang zeitlich versetzt auf den selben Leitungen übertragen. Anschließend werden sie in Bildspeichern gespeichert.

Bei der Digitalisierung eines Farbbildes, das z.B. in einem anderen Farbbild wiedergegeben werden soll und dessen Größe kleiner ist als die des anderen Farbbildes, entstehen Probleme beim Multiplexen der Luminanz und der Chrominanz oder der Signale rot, grün und blau.

Um den Aufwand bei der Analog/Digital-Umwandlung eines Videosignals zu minimieren, werden üblicherweise Multiplexer verwendet. Bei der Verwendung von Multiplexern ist nur eine Analog/Digital-Umsetzung für alle drei Signale erforderlich. Dafür muß der Analog/Digital-Wandler jedoch mit einer hohen Abtastrate arbeiten, um ein möglichst originales Wiedergabebild zu erzielen.

Es gibt mehrere verschiedene Lösungen, die einzelnen Abtastwerte des Videosignals durch den Multiplexer sequentiell anzuordnen. Z.B. kann eine Zeile einen YUYV Datenfluß enthalten, wobei Y das Luminanzsignal und U und V die Chrominanzsignalanteile (U = B - Y, V = R - Y) sind.

Das Ausgangssignal des Multiplexers wird einem Analog/Digital-Converter zugeführt, anschließend werden die Abtastwerte gespeichert und mit einer höheren Frequenz ausgelesen, um die horizontale Kompression des Bildes zu erzielen. Für die vertikale Kompression wird eine von drei oder vier Zeilen der eingehenden Videoquelle analysiert. Abhängig von dem Ergebnis wird das Reduktionsverhältnis gewählt. Falls erforderlich wird ein vertikales Filter zusätzlich verwendet.

Am Ausgang der Digital/Analog-Umsetzung, für die wegen der Signale Y, U und V drei Convertern benötigt werden, wird das reduzierte Bild dem Hauptbild überlagert.

Die bis heute entwickelten Konzepte wurden in der Art und Weise realisiert, daß ein zusätzliches Modul zur Bildbearbeitung in einem normalen Fernsehgerät eingefügt und die Verbindungen dazu minimiert wurde. Weiterhin wird eine hohe Multiplexfrequenz verwendet, um eine korrekte Bandbreite für jede Videokomponente zu erzielen.

Der Erfindung liegt die Aufgabe zugrunde, eine Schaltung für die Aufbereitung eines ersten Videobildes anzugeben, welches die Wiedergabe des ersten Videobildes in einem zweiten Videobild mit geringem Aufwand erlaubt.

Diese Aufgabe wird durch die im Patentanspruch 1 angegebenen Maßnahmen gelöst.

Erfindungsgemäß wird vorgeschlagen, zwecks Datenreduktion das ankommende Videosignal unterabzutasten. Die Unterabtastung bringt zwar Informationsverluste mit sich. Diese Informationsverluste sind bei z.B. einer Standbildwiedergabe, bei der Wiedergabe mittels eines Bildschirmes kleiner Größe oder Wiedergabe eines zweiten Bildes in einem ersten Bild wegen des notwendigen Reduktionsverhältnisses, welches z.B. bei einem Viertel des wiedergegebenen Hauptbildes liegt, tolerierbar.

Für die Bearbeitung des Videosignals können z.B. die Luminanz und die Farbdifferenzkomponenten gewählt werden. Für die beide Signalanteile (Luminanz und Chrominanz) wird sowohl die selbe Horizontalfilterstruktur verwendet als auch nur ein Analog/Digital-Converter, wobei jedes der Videosignalkomponenten einer Unterabtastung unterworfen wird.

Im folgenden wird ein vorteilhaftes Ausführungsbeispiel an Hand der Zeichnung erläutert. Es zeigt:

Fig. 1    eine Schaltungsanordnung zur Bearbeitung von Video komponenten mittels einer Multiplexeranordnung.

Fig. 2    ein Zeitdiagramm

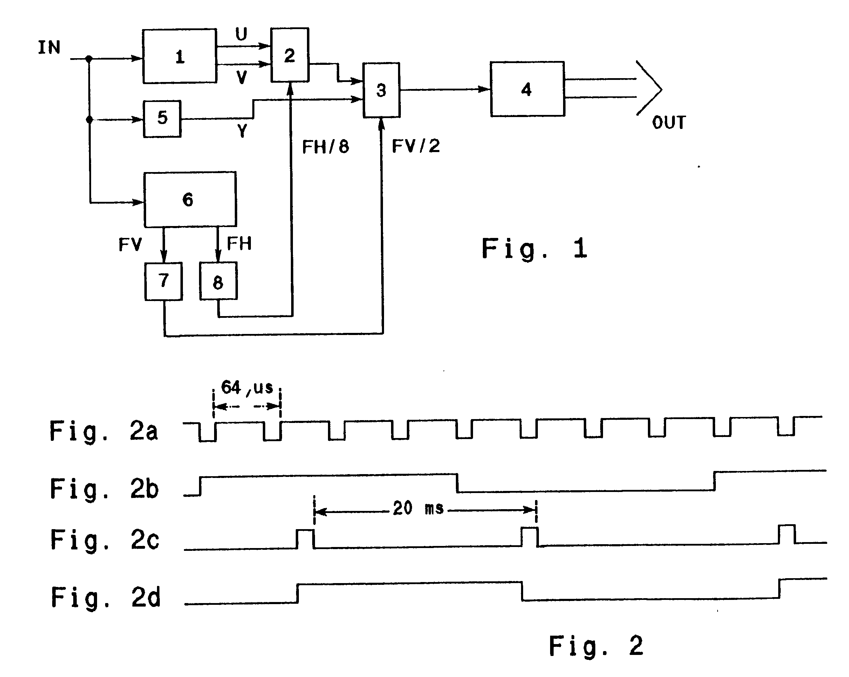

Am Eingang IN der in Fig. 1 gezeigten Schaltungsanordnung liegt das Videosignal an. Es wird auf den Eingang eines Farbdecoders 1, eines Tiefpaßfilters 5 und einer Synchronabtrennschaltung und Taktzentrale 6 geführt. Am Ausgang des Farbdecoders 1 liegen die Chrominanzsignale U, V an, die auf einen 2:1 Multiplexer 2 geführt werden. Der 2:1 Multiplexer wird mit einer Frequenz FH/8 umgeschaltet, die ein Achtel der Zeilenfrequenz beträgt. Somit werden nach jeder vierten Zeile die Eingänge V des Multiplexers 2 umgeschaltet. Der Ausgang des 2:1 Multiplexers 2 und der Ausgang des Tiefpaßfilters 5, an welchem das Luminanzsignal Y anliegt, werden auf einen 2:1 Multiplexer 3 geführt, der mit einer Frequenz FV/2 umgeschaltet wird. Die Frequenz FV/2 entspricht der halben Bildfrequenz. Die Eingänge des Multiplexers 3 werden somit bei jedem Halbbildwechsel umgeschaltet . Die Umschaltfrequenzen FH/8, FV/2 der Multiplexer 2, 3 werden durch die Synchronabtrennschaltung und Taktzentrale 6 und durch Dividierer 7, 8 erzeugt. Der Ausgang des Multiplexers 3 führt auf einen Analog/Digital-Wandler 4, an dessen Ausgang der digitale Datenstrom anliegt.

Fig. 2a zeigt die Zeilenimpulse und Fig. 2b die aus ihnen von der Synchronabtrennschaltung und Taktzentrale 6 und dem Dividierer 8 erzeugten Umschaltfrequenz FH/8. Fig. 2c zeigt die Bildimpulse und Fig. 2d die aus ihnen von der Synchronabtrennschaltung und Taktzentrale 6 und dem Dividierer 7 erzeugten Umschaltfrequenz FV/2.

Es ergibt sich folgende Abtaststruktur des Videosignals:

Erfindungsgemäß werden von einem Vollbild die Halbbilder mit Hilfe der Multiplexer 2, 3 z.B. so aufbereitet, daß im ersten Halbbild das Luminanzsignal Y, und im anderen Halbbild die Farbdifferenzsignale U und V verwendet werden.

Es werden somit aus ankommenden Bildsignalen für das erste Halbbild nur das Luminanzsignal Y dem Digital/Analog-Wandler 4 zugeführt. Das nächste Halbbild enthält nur die Information der zwei Farbdifferenzsignale U oder V, wobei in den ersten vier fortlaufenden Zeilen die erste Farbkomponente U des Halbbildes und in den nächsten vier fortlaufenden Zeilen die zweite Komponente V enthalten sind. Dieser Vorgang wiederholt sich für das gesamte zweite Halbbild.

Dem Eingang des Analog/Digital-Wandlers 4 werden dann die zwei Halbbilder mit nachstehendem Informationsgehalt zugeführt:

| | 1. Halbbild | 2. Halbbild |
|---|---|---|
| Zeilen | U | Y |
| | U | Y |
| | U | Y |
| | U | Y |
| | V | Y |
| | V | Y |
| | V | Y |
| | V | Y |
| | U | Y |
| | U | Y |
| | . | . |
| | . | . |
| | . | . |

**Patentansprüche**

**1.** Schaltungsanordnung zur Bearbeitung von Videosignalen, die aus Chrominanz- (U, V) und Luminanzkomponenten (Y) bestehen, mit der halbbildweise abwechselnd jeweils nur eine der Videokomponenten weitergeleitet wird und die aus zwei Anteilen der Chrominanzkomponenten (U oder V) jeweils einen abwechselnd auswählt, **dadurch gekennzeichnet,** daß die Chrominanzkomponentenanteile (U, V) einem mit einer Frequenz (FH/8) kleiner als die Zeilenfrequenz umschaltenden ersten Multiplexer (2) zugeführt werden, der abwechselnd jeweils eine Gruppe von Zeilen eines der Chrominanzkomponentenanteile (U oder V) weiterleitet, und daß das Luminanzsignal (Y) und das Ausgangssignal des ersten Multiplexers (2) einem zweiten Multiplexer (3) zugeführt werden, welcher mit der halben Bildfrequenz (FV/2) umschaltet.

**2.** Schaltungsanordnung nach Anspruch 1, **dadurch gekennzeichnet,** daß die Umschalt-Frequenz (FH/8) des ersten Multiplexers (2) ein achtel der Zeilenfrequenz beträgt.

**Claims**

1. A circuit arrangement for processing video signals comprising chrominance components (U, V) and luminance components (Y), with which, with alternating half-images, only one of the video components at a time is passed on, and which alternately selects one of two parts of the chrominance components (U or V), characterised in that the chrominance component parts (U, V) are passed to a first multiplexer (2), which switches over at a frequency (FH/8) lower than the line frequency and which alternately passes on a group of lines of one of the chrominance component parts (U or V), and that the luminance signal (Y) and the output signal from the first multiplexer (2) are passed to a second multiplexer (30, which switches over at half the image frequency (FV/2).

2. A circuit arrangement according to claim 1, characterised in that the switch-over frequency (FH/8) of the first multiplexer (2) is one eighth of the line frequency.

**Revendications**

1. Dispositif de circuit pour le traitement de signaux vidéo qui se composent de composantes de chrominance (U, V) et d'une composante de luminance (Y), avec lequel une seule des composantes vidéo n'est transmise respectivement en alternance trame par trame et qui ne sélectionne en alternance respectivement qu'une des deux fractions des composantes de chrominance (U ou V), **caractérisé en ce** que les fractions de composantes de chrominance (U, V) sont amenées à un premier multiplexeur (2) qui commute à une fréquence (FH/8) inférieure à la fréquence ligne, multiplexeur qui transmet en alternance respectivement un groupe de lignes de l'une des fractions des composantes de chrominance (U ou V) et que le signal de luminance (Y) et le signal de sortie du premier multiplexeur (2) sont amenés à un second multiplexeur (3) qui commute à la demi fréquence d'image (FV/2).

2. Dispositif de circuit selon la revendication 1, **caractérisé en ce** que la fréquence de commutation (FH/8) du premier multiplexeur (2) est égale à un huitième de la fréquence ligne.

Fig. 1

Fig. 2a

Fig. 2b

Fig. 2c

Fig. 2d

Fig. 2